# EUROPÄISCHE PATENTSCHRIFT

(11) **EP 3 938 267 B1**
(45) Veröffentlichungstag und Bekanntmachung des Hinweises auf die Patenterteilung: **17.01.2024**
(21) Anmeldenummer: 20713842.1
(22) Anmeldetag: 09.03.2020
(51) Int. Cl.: B62B 9/00, B62B 5/00

(54) **KINDERWAGENGESTELL UND KINDERWAGEN**
STROLLER FRAME AND STROLLER
CHÂSSIS POUR POUSSETTE ET POUSSETTE

(30) Priorität: 14.03.2019 DE 202019101456 U
(43) Veröffentlichungstag der Anmeldung: 19.01.2022
(73) Patentinhaber: CYBEX GmbH, 95448 Bayreuth (DE)
(72) Erfinder: HOLLEIS, Ralf, 95448 Bayreuth (DE)
(74) Vertreter: Meissner Bolte Partnerschaft mbB
(86) Internationale Anmeldenummer: PCT/EP2020/056180
(87) Internationale Veröffentlichungsnummer: WO 2020/182715

(56) Entgegenhaltungen:
- EP-A2- 2 332 806
- EP-B1- 2 019 016
- US-A- 6 148 942
- US-A1- 2018 208 226
- US-B1- 9 796 401

## Beschreibung

Die Erfindung betrifft ein motorisiertes Kinderwagengestell sowie einen entsprechenden Kinderwagen.

EP 2 332 806 A2 offenbart einen Krippenkinderwagen für mehrere Kinder, wobei der Krippenkinderwagen einen durch einen Elektromotor ausgebildeten Hilfsantrieb aufweist. Eine Batterie zur Speisung des Elektromotors ist unter einer Bodenplatte neben einem Mittelrohr des Krippenkinderwagens vorgesehen. In der US 9796401 B1 wird ein motorisiertes Hilfsmittel offenbart, das über Klemmen an der Achse eines Kinderwagens befestigt werden soll und eine beabstandet von den Klemmen positionierte Batterie aufweist. Die US 20180208226 A1 offenbart einen Antrieb für einen Golfwagen mit einer von einer Achse getragenen Kontrolleinheit, wobei in der Kontrolleinheit auch Batterien zur Versorgung eines Motors vorgesehen sind.

Motorisierte Kinderwägen können so konfiguriert sein, dass sie ausschließlich durch Motorkraft bewegt werden können. Weiterhin ist es grundsätzlich bekannt, Kinderwägen mit Motorunterstützung auszustatten, die die Antriebskraft einer den Kinderwagen bedienenden Person unterstützt, jedoch keine Unterstützung leistet, wenn durch den Bedienenden keine Kraft ausgeübt wird.

Aus EP 2 019 016 B1 ist ein Kinderwagen mit einem Elektromotor und einer diesen versorgenden Batterie bekannt. In einer Ausführungsform ist die Batterie außerhalb einer Achse, an deren beiden Enden jeweils ein Rad gelagert ist, vorgesehen. In einer weiteren Ausführungsform ist die Batterie in einem Hohlraum der Achse integriert. Bei einer Anordnung außerhalb der Achse ist die Batterie vergleichsweise schlecht geschützt. Bei einer Anordnung innerhalb der Achse ist die Batterie besser geschützt, wobei sich dann jedoch andere Schwierigkeiten ergeben, insbesondere im Hinblick auf eine Dimensionierung, Montage und Handhabung der Batterie.

Es ist daher Aufgabe der Erfindung, ein Kinderwagengestell sowie einen entsprechenden Kinderwagen vorzuschlagen, der einfach und dennoch zuverlässig in der Bedienung ist. Insbesondere soll eine für einen Elektromotor benötigte Batterie möglichst einfach und ohne Komplikationen verwendet werden können.

Diese Aufgabe wird durch ein Kinderwagengestell nach Anspruch 1 gelöst. Bevorzugte Ausführungsformen ergeben sich aus den abhängigen Ansprüchen.

Insbesondere bereitgestellt wird ein Kinderwagengestell, umfassend mindestens einen Elektromotor, zum vorzugsweise unterstützenden Antreiben des Kinderwagengestells, mindestens eine Räderverbindungseinrichtung, insbesondere Räderverbindungsstrebe, vorzugsweise Radachse, weiter vorzugsweise Hinterradachse, und mindestens ein mit der Räderverbindungseinrichtung verbundenes oder verbindbares Batteriemodul, das im Montagezustand zumindest abschnittsweise außerhalb der Räderverbindungseinrichtung und zumindest abschnittsweise, vorzugsweise überwiegend, insbesondere vollständig, unterhalb eines oberen Endes der Räderverbindungseinrichtung angeordnet ist.

Ein weiterer Aspekt liegt darin, dass das Batteriemodul (zumindest im Montagezustand) zumindest abschnittsweise außerhalb der Räderverbindungseinrichtung, und zumindest abschnittsweise, insbesondere überwiegend, vorzugsweise vollständig, unterhalb eines oberen Niveaus eines oberen Endes der Räderverbindungseinrichtung angeordnet ist. Dadurch kann einerseits das Batteriemodul vergleichsweise einfach erreicht werden, insbesondere abmontiert oder ausgetauscht werden. Durch die vergleichsweise tiefe Anordnung wird das Batteriemodul vorzugsweise zumindest teilweise durch die ohnehin vorgesehene Räderverbindungseinrichtung geschützt. Außerdem wird durch den damit verbundenen vergleichsweise tiefen Schwerpunkt eine stabile Lagerung der Batterie bzw. eine stabile Konfiguration des gesamten Kinderwagens (bzw. Kinderwagengestells) erreicht. Auf besonders einfache Art und Weise wird damit auf einfache Art und Weise eine einfache und dennoch zuverlässige Verwendung der Batterie ermöglicht, beispielsweise beim Abnehmen zum Laden oder Anbringen nach dem Laden.

Konkret soll das Batteriemodul zumindest überwiegend unterhalb des Niveaus des oberen Endes der Räderverbindungseinrichtung angeordnet sein. Darunter ist insbesondere zu verstehen, dass ein Schwerpunkt und/oder eine mittlere Höhe des Batteriemoduls unterhalb des Niveaus des oberen Endes der Räderverbindungseinrichtung angeordnet ist, insbesondere um mindestens 0,5 cm, vorzugsweise mindestens 1 cm und/oder um mindestens 10 %, vorzugsweise mindestens 20 % einer Höhenerstreckung (als Abstand eines Niveaus eines oberen Endes der Räderverbindungseinrichtung von einem Niveau eines unteren Endes derselben bzw. als (maximale) vertikale Erstreckung des jeweiligen Elements bzw. der jeweiligen Einrichtung; und zwar insbesondere im Betriebszustand des Kinderwagens) der Räderverbindungseinrichtung tiefer liegt. Unter einer mittleren Höhe ist hier und im Folgenden insbesondere eine Höhe zu verstehen, die auf halbem Weg (in vertikaler Richtung) zwischen einem oberen Ende der jeweiligen Einrichtung bzw. Komponente und einem unteren Ende derselben liegt. Vorzugsweise liegt ein Schwerpunkt des Batteriemoduls unterhalb eines Niveaus eines Schwerpunkts der Räderverbindungseinrichtung.

Unter einem Niveau eines oberen Endes der Räderverbindungseinrichtung ist insbesondere eine (horizontale) Ebene zu verstehen, die das obere Ende der Räderverbindungseinrichtung umfasst. Dies soll durch den höchsten Punkt bzw. die höchsten Punkte der Räderverbindungseinrichtung (im Betriebszustand) verstanden werden. Bei einer üblichen Radachse können diese höchsten Punkte eine Linie ausbilden.

Unter einer Anordnung zumindest abschnittsweise außerhalb der Räderverbindungseinrichtung ist vorzugsweise eine Anordnung zu verstehen, bei der das Batteriemodul im Montagezustand von außen zugänglich ist bzw. abschnittsweise sichtbar ist. Vorzugsweise liegen in diesem Sinne mindestens 10 %, weiter vorzugsweise mindestens 50 % einer äußeren Oberfläche des Batteriemoduls (in einer isolierten Betrachtung des Batteriemoduls) in diesem Sinne frei. Gegebenenfalls kann das Batteriemodul vollständig außerhalb oder zumindest zu mindestens 30 Gew.-% und/oder mindestens 30 Vol.-%, oder mindestens 80 Gew.-% und/oder mindestens 80 Vol.-%, außerhalb der Räderverbindungseinrichtung liegen. Konkret soll das Batteriemodul nicht (zumindest nicht vollständig) innerhalb der Räderverbindungseinrichtung, beispielsweise in einem entsprechenden zylinderförmigen Hohlraum derselben angeordnet sein. Dies würde die Verwendung des Batteriemoduls erschweren.

Alternativ oder zusätzlich zur obigen Anordnung unterhalb eines Niveaus des oberen Endes der Räderverbindungseinrichtung soll das Batteriemodul zumindest abschnittsweise unter (bzw. direkt unterhalb) der Räderverbindungseinrichtung angeordnet sein. Wenn man die Räderverbindungseinrichtung als "Regenschirm" ansieht und den Bereich unter der Räderverbindungseinrichtung als den Bereich, der durch den Regenschirm bei senkrecht fallenden Wassertropfen geschützt wird, befindet sich das Batteriemodul also vorzugsweise zumindest abschnittsweise, weiter vorzugsweise überwiegend, ggf. vollständig oder ggf. nicht vollständig in diesem geschützten Bereich. Unter einer Anordnung zumindest abschnittsweise unter der Räderverbindungseinrichtung ist insbesondere zu verstehen, dass zumindest ein Abschnitt einer Projektionsfläche des Batteriemoduls auf eine horizontale Ebene mit einer entsprechenden Projektionsfläche der Räderverbindungseinrichtung (auf die horizontale Ebene) überlappt. Insbesondere sollen mindestens 10 %, vorzugsweise mindestens 30 % und/oder höchstens 90 % der Projektionsfläche des Batteriemoduls mit einer entsprechenden Projektionsfläche der Räderverbindungseinrichtung überlappen. Alternativ oder zusätzlich soll der entsprechende Abschnitt des Batteriemoduls (der die überlappende Projektionsfläche ausmacht) mindestens 10 Gew.-% und/oder mindestens 10 Vol.-%, vorzugsweise mindestens 30 Gew.-% und/oder mindestens 30 Vol.-% und/oder höchstens 90 Gew.-% und/oder höchstens 90 Vol.-% des gesamten Batteriemoduls ausmachen. In konkreten Ausführungsformen sind ggf. zumindest Abschnitte der Batterie nicht in diesem Sinne unter der Räderverbindungseinrichtung angeordnet, auch wenn diese unterhalb eines Niveaus des oberen Endes der Räderverbindungseinrichtung angeordnet sein können (jedoch nicht müssen).

Gemäß einem weiteren Aspekt wird ein Kinderwagengestell, insbesondere wie oben beschrieben, vorgeschlagen, umfassend mindestens einen Elektromotor, zum vorzugsweise unterstützenden Antreiben des Kinderwagengestells, mindestens eine Räderverbindungseinrichtung, insbesondere Räderverbindungsstrebe, vorzugsweise Radachse, weiter vorzugsweise Hinterradachse, und mindestens ein mit der Räderverbindungseinrichtung verbundenes oder verbindbares Batteriemodul, das im Montagezustand zumindest abschnittsweise außerhalb der Räderverbindungseinrichtung angeordnet ist und eine Höhe und/oder einen maximalen Durchmesser (senkrecht zu einer Längsachse der Räderverbindungseinrichtung) aufweist, die/der maximal 1,5-mal so groß, vorzugsweise maximal 1,0-mal so groß ist/sind, wie eine Höhe bzw. ein maximaler Durchmesser der Räderverbindungseinrichtung. Unter einem maximalen Durchmesser der entsprechenden Einrichtung bzw. des entsprechenden Elementes ist insbesondere der Abstand desjenigen Punktepaares zu verstehen, das unter Berücksichtigung sämtlicher Querschnitte senkrecht zur (jeweiligen) Längsachse, den größten Abstand zueinander aufweist. Insgesamt kann eine einfach verwendbare und dennoch zuverlässige Energieversorgung ermöglicht werden.

Unter einer Räderverbindungseinrichtung ist insbesondere eine Einrichtung zu verstehen, die zwei Räder eines Radpaares miteinander (vorzugsweise unmittelbar) verbindet und diese hält bzw. stützt. Eine derartige Räderverbindungseinrichtung ist vorzugsweise in Form einer (ggf. zumindest im Betriebszustand des Kinderwagens im Wesentlichen horizontal verlaufenden Strebe) angeordnet, ggf. zylindrisch (wenn auch nicht, zumindest nicht zwingend, kreiszylindrisch). Eine (axiale) Länge einer derartigen Räderverbindungseinrichtung ist vorzugsweise mindestens 5-mal so lang, wie ein (maximaler) Durchmesser (als größter Abstand eines Punktepaares in sämtlichen Querschnitten, die senkrecht auf der axialen Länge liegen). In zumindest einem Zustand der miteinander verbundenen Räder liegt die Räderverbindungseinrichtung vorzugsweise vollständig innerhalb eines Zylinders, dessen Stirnflächen durch die Außenseiten der Räder gebildet wird.

Die Räderverbindungseinrichtung hat vorzugsweise eine Höhenerstreckung (im Betriebszustand) von weniger als 15 cm, weiter vorzugsweise weniger als 7 cm. Funktional und/oder strukturell eigenständige Einheiten und/oder Elemente, wie beispielsweise eine Betätigungseinrichtung und/oder ein Motor bzw. ein Motorgehäuse und/oder eine Bremse sollen vorzugsweise nicht (können aber) als Bestandteil der Räderverbindungseinrichtung angesehen werden. Die Räderverbindungseinrichtung erstreckt sich vorzugsweise zumindest über 80 %, insbesondere über 90 %eines Abstandes, ggf. eines gesamten Abstandes, der miteinander zu verbindenden Räder.

In konkreten Ausführungsformen kann die Räderverbindungseinrichtung eine Radstrebe bzw. Radachse, vorzugsweise Hinterradachse (alternativ Vorderradachse) darstellen bzw. eine solche umfassen. Alternativ kann die Räderverbindungseinrichtung als Welle oder eine solche umfassend ausgebildet sein. Die der Räderverbindungseinrichtung zugeordneten Räder werden vorzugsweise durch mindestens einen Elektromotor (beispielsweise einen gemeinsamen oder jeweils einen Elektromotor) angetrieben.

Unter einem Batteriemodul ist insbesondere ein (strukturell abgegrenztes bzw. abgrenzbares) Modul zu verstehen, das mindestens eine Batterie umfasst. Dabei kann eine Batterie eine oder mehrere galvanische Zellen enthalten. Die Batterie ist vorzugsweise ein Akkumulator. Das Modul wird vorzugsweise durch ein das Modul nach außen abgrenzendes Gehäuse definiert. Dieses Gehäuse ist in Ausführungsformen zylindrisch (jedoch nicht, zumindest nicht zwingend, kreiszylindrisch, was jedoch möglich ist). Das Batteriemodul kann ein Gewicht von mindestens 100 g, vorzugsweise mindestens 400 g und/oder höchstens 3 kg, vorzugsweise höchstens 700 g, aufweisen. Die (maximale) Kapazität kann mindestens 10 Wh (0,28 Ah bei 36 V), vorzugsweise mindestens 40 Wh (1,11 Ah bei 36 V), und/oder höchstens 400 Wh (11,1 Ah bei 36 V), ggf. höchstens 150 Wh (4,17 Ah bei 36 V), beispielsweise 93,6 Wh (2,6 Ah bei 36 V), betragen. Vorzugsweise handelt sich bei mindestens einer bzw. der mindestens einen Batterie (ggf. bei mehreren oder sämtlichen vorgesehene Batterien) um eine Lithium-Ionen-Batterie und/oder um eine Batterie des Typs 18650 und/oder um eine zylindrische, insbesondere kreiszylindrische Zelle, und/oder um eine prismatische Zelle und/oder Pouch-Zelle.

Das Batteriemodul hat vorzugsweise eine Höhenerstreckung (im Betriebszustand) von weniger als 15 cm, weiter vorzugsweise weniger als 5 cm und/oder mehr als 1 cm und/oder eine Tiefenerstreckung (Erstreckung in Fahrtrichtung, im Betriebszustand) von weniger als 20 cm, weiter vorzugsweise weniger als 7 cm und/oder mehr als 2 cm. Das Batteriemodul erstreckt sich vorzugsweise zumindest über 50 %, insbesondere zumindest über 65 %, und/oder höchstens 90 % eines Abstandes der miteinander zu verbindenden Räder und/oder einer Längserstreckung der Räderverbindungseinrichtung. Ggf. kann sich das Batteriemodul auch über mehr als 70 % oder sogar 90 % dieses Abstandes erstrecken.

Das Batteriemodul erstreckt sich (in einer Längserstreckung; im Montagezustand bzw. im Betriebszustand des Kinderwagens/Kinderwagengestells) vorzugsweise zumindest im Wesentlichen parallel zu einer Verbindungslinie zwischen den beiden durch die Räderverbindungseinrichtung verbundenen Rädern, insbesondere parallel zu einer Verbindungslinie zwischen jeweiligen Zentren der beiden zu verbindenden Rädern, und/oder zumindest im Wesentlichen parallel zu einer Längserstreckung der Räderverbindungseinrichtung und/oder zumindest im Wesentlichen horizontal.

Unter einem Montagezustand soll derjenige Zustand verstanden werden, bei dem das Batteriemodul so in dem Kinderwagengestell (insbesondere in einer entsprechend vorgesehenen Weise bzw. an einer dazu vorgesehenen Batterieaufnahme und/oder -halterungsstruktur) angebracht ist, dass der Elektromotor mit Strom versorgt werden kann (soweit entsprechende Einstellungen, wie beispielsweise elektrische Schalter, entsprechend betätigt werden/sind).

Vorzugsweise berühren Räderverbindungseinrichtung oder Batteriemodul einander (insbesondere über eine Fläche von mindestens 5 cm², vorzugsweise mindestens 10 cm², weiter vorzugsweise mindestens 50 cm²) bzw. sind entsprechend in unmittelbarer Verbindung oder können zumindest unmittelbar miteinander verbunden werden.

Bei der Räderverbindungseinrichtung kann es sich um ein Hohlprofil oder Gehäuse handeln, oder ein solches kann zumindest von der Räderverbindungseinrichtung umfasst sein.

Mindestens ein Antrieb, zumindest ein Elektromotor, kann an oder benachbart zur Räderverbindungseinrichtung angeordnet sein.

Unter einer vertikalen Ebene soll nachfolgend (soweit nicht abweichend angegeben) eine Ebene verstanden werden, die sich senkrecht zur Horizontalen und senkrecht zu einer Fahrtrichtung erstreckt. Eine als erste vertikale Ebene bezeichnete vertikale Ebene tangiert vorzugsweise ein äußeres, weiter vorzugsweise hinteres, Ende der Räderverbindungseinrichtung. In dem Zusammenhang ist ein äußeres Ende der Räderverbindungseinrichtung weiter weg von einem Zentrum (Schwerpunkt) des Kinderwagengestells bzw. Kinderwagens, als ein entsprechendes inneres Ende. Bei einer Hinterradstrebe bzw. einer Hinterradachse ist das äußere Ende dann entsprechend ein hinteres Ende (bzw. ein gegensätzlich zur Fahrtrichtung weisendes Ende); bei einer Vorderradstrebe bzw. einer Vorderradachse ist das äußere Ende entsprechend ein vorderes Ende. Unter einer Innenseite ist vorzugsweise derjenige Halbraum zu verstehen, der durch die entsprechende vertikale Ebene begrenzt wird und das Zentrum (den Schwerpunkt) des Kinderwagengestells bzw. Kinderwagens aufnimmt.

Vorzugsweise ist das Batteriemodell im Montagezustand zumindest abschnittsweise, insbesondere überwiegend, vorzugsweise vollständig, auf einer Innenseite der ersten vertikalen Ebene angeordnet. Alternativ oder zusätzlich ist das Batteriemodul so angeordnet, dass eine Projektion desselben auf die erste vertikale Ebene zumindest abschnittsweise, vorzugsweise überwiegend und/oder nicht-vollständig, mit einer Projektion der Räderverbindungseinrichtung auf die vertikale Ebene überlappt. Eine überwiegende Anordnung bzw. Überlappung soll hier wiederum bedeuten, dass insbesondere mindestens 50 Gew.-% oder 50 Vol.-%, vorzugsweise mindestens 70 Gew.-% oder 70 Vol.-% des Batteriemoduls die jeweilige Bedingung erfüllen. Im Allgemeinen ist es möglich, dass eine Projektion des Schwerpunktes des Batteriemoduls auf die erste vertikale Ebene innerhalb oder, alternativ, außerhalb einer Projektion der Räderverbindungseinrichtung auf die vertikale Ebene liegt. Auch bei einer derartigen Anordnung bzw.

Ausgestaltung des Batteriemoduls wird eine sichere und zuverlässige Verwendung ermöglicht.

Das Batteriemodul erstreckt sich über zumindest die Hälfte, vorzugsweise über zumindest 80 %, weiter vorzugsweise über 95 % einer (axialen) Länge der Räderverbindungseinrichtung und/oder eines Radabstandes der durch die Räderverbindungseinrichtung verbundenen Räder. Dadurch kann das Batteriemodul insbesondere vergleichsweise effektiv von der Räderverbindungseinrichtung geschützt werden bzw. vergleichsweise komplikationslos verwendet werden.

Bereitgestellt wird ein Kinderwagengestell, umfassend mindestens einen Elektromotor, zum vorzugsweise unterstützenden Antreiben des Kinderwagengestells, mindestens eine Räderverbindungseinrichtung, insbesondere Radstrebe, vorzugsweise Radachse, weiter vorzugsweise Hinterradachse, und mindestens ein mit der Räderverbindungseinrichtung verbundenes oder verbindbares Batteriemodul, das im Montagezustand vorzugsweise zumindest abschnittsweise außerhalb der Räderverbindungseinrichtung angeordnet ist, wobei sich das Batteriemodul über zumindest die Hälfte, vorzugsweise über zumindest 80 %, weiter vorzugsweise über 95 % eines Radabstandes der durch die Räderverbindungseinrichtung verbundenen Räder und/oder einer (axialen) Länge bzw. Längserstreckung der Räderverbindungseinrichtung erstreckt.

Das Batteriemodul bzw. ein Gehäuse desselben ist vorzugsweise zumindest abschnittsweise in (unmittelbarem) physischen (und/oder elektrischen) Kontakt mit der Räderverbindungseinrichtung bzw. einem Gehäuse und/oder Außenwandung derselben.

Das Batteriemodul ist von der Räderverbindungseinrichtung, insbesondere mittels eines Werkzeuges und/oder, vorzugsweise, manuell, entfernbar. Dazu kann beispielsweise mindestens eine manuelle Betätigungseinrichtung, wie insbesondere eine Taste, ein Knopf, ein Zugelement und/oder ein Hebel, vorgesehen sein. Dadurch wird die Verwendung des Batteriemoduls weiter vereinfacht.

Das Batteriemodul ist ausführungsgemäß ohne Elektromotor und/oder sonstige Antriebselemente, wie beispielsweise ein Getriebe (zum zumindest unterstützenden Antreiben des Kinderwagengestells) ausgebildet. Dadurch kann das Batteriemodul vergleichsweise kleinbauend ausgebildet werden, was weiter die Verwendung erleichtert.

Vorzugsweise wird das Batteriemodul im Montagezustand aus zumindest einem ersten Winkel betrachtet, überwiegend, insbesondere vollständig von der Räderverbindungseinrichtung verdeckt. Der zumindest eine erste Winkel bzw. zumindest einer von ggf. mehreren (diese Bedingung erfüllenden) ersten Winkeln ist vorzugsweise größer 0°, weiter vorzugsweise größer 20° und/oder kleiner 90°, vorzugsweise kleiner 60° gegenüber einer horizontalen Ebene (wobei insbesondere von einer Blickrichtung nach schräg-unten auszugehen ist). Alternativ oder zusätzlich wird das Batteriemodul im Montagezustand aus zumindest einem zweiten Winkel betrachtet, überwiegend nicht, insbesondere vollständig nicht, von der Räderverbindungseinrichtung verdeckt. Der zweite Winkel kann dem ersten Winkel um 180° verdreht entsprechen (hier jedoch insbesondere von einer Blickrichtung nach schräg-oben ausgehend). Bei derartigen Lösungen verschwindet das Batteriemodul (teilweise oder vollständig) bei einer (üblichen) Blickrichtung von außen (insbesondere hinten, bei einer schiebenden Person) nach schräg-unten. Dadurch kann ein ansprechendes Äußeres erzielt werden und gleichzeitig das Batteriemodul von äußeren Einwirkungen (beispielsweise dem Fuß der schiebenden Person) geschützt werden. Dabei wurde erkannt, dass gerade der Fuß des Bedienenden oftmals von schräg-oben mit der Hinterradstrebe bzw. Hinterradachse in Kontakt kommt, beispielsweise um eine Bremse zu betätigen oder den Fuß abzustellen.

Räderverbindungseinrichtung und/oder Batteriemodul weisen vorzugsweise (jeweils) eine flache (ebene) Seite auf, die sich beispielsweise über mindestens 5 cm², vorzugsweise mindestens 10 cm², weiter vorzugsweise mindestens 50 cm² und/oder höchstens 500 cm² erstreckt. In einer Ausführungsform sind Räderverbindungseinrichtung und Batteriemodul (unmittelbar) über ihre Flachseiten miteinander verbunden.

Ein Randabschnitt eines Querschnitts der Räderverbindungseinrichtung, der (im Montagezustand) nicht an dem Batteriemodul anliegt, ist vorzugsweise abgerundet (eckenlos bzw. kantenlos), insbesondere zumindest in etwa bogenförmig, vorzugsweise kreisbogenförmig, ausgebildet. Alternativ oder zusätzlich ist ein Randabschnitt eines Querschnitts eines Batteriemoduls, der (im Montagezustand) nicht an der Räderverbindungseinrichtung anliegt, vorzugsweise abgerundet, insbesondere zumindest in etwa bogenförmig, ggf. mit abgerundeten Eckbereichen oder ohne abgerundete Eckbereiche, ausgebildet. Bei den hier angesprochenen Querschnitten handelt es sich vorzugsweise um Querschnitte senkrecht auf eine Längsachse der Räderverbindungseinrichtung bzw. des Batteriemoduls. Der entsprechende Querschnitt des Batteriemoduls kann angenähert viereckig, insbesondere rechteckförmig oder trapezförmig, sein, mit abgerundeten Ecken in dem Bereich, der von der Räderverbindungseinrichtung weg weist und/oder nicht-abgerundeten Ecken in dem Bereich, der der Räderverbindungseinrichtung zugewandt ist. Insgesamt kann durch eine derartige Ausbildung mit Abrundungen (ggf. abgerundeten Eckbereichen) ein Risiko für Beschädigungen reduziert werden. Außerdem wird dadurch ein ansprechendes Äußeres mit quasi unsichtbarem Batteriemodul erzielt.

Äußere Flächen der Räderverbindungseinrichtungen des Batteriemoduls gehen vorzugsweise (im Montagezustand) zumindest abschnittsweise zumindest im Wesentlichen (bündig bzw. stufenlos) ineinander über. Auch dadurch kann ein Hängenbleiben eines Gegenstandes bzw. Körperteils vermieden werden bzw. ein entsprechendes Risiko reduziert werden, so dass das Batteriemodul besonders sicher untergebracht ist.

Ausführungsgemäß ist das Batteriemodul aus dem Montagezustand entfernbar, wobei dazu ggf. (erst) eine Arretiereinrichtung zu lösen ist. Es kann (insbesondere an der Flachseite, vorzugsweise an einem Rand der Flachseite, der Räderverbindungseinrichtung) eine Positionierhilfe, vorzugswiese mindestens ein Anschlag vorgesehen sein, insbesondere so dass man beim Einsetzen des Batteriemoduls intuitiv die richtige Position findet.

Das Kinderwagengestell umfasst vorzugsweise eine, insbesondere per Fuß zu betätigende, Betätigungseinrichtung für eine Bremse, insbesondere Feststellbremse, die vorzugsweise zumindest abschnittsweise, weiter vorzugsweise ausschließlich, auf der Räderverbindungseinrichtung (diese berührend) und/oder nicht auf dem Batteriemodul (dieses nicht berührend) angeordnet ist. Gerade bei einer derartigen Räderverbindungseinrichtung mit Betätigungseinrichtung ist die erfindungsgemäße Anordnung des Batteriemoduls besonders vorteilhaft, da das Batteriemodul dann vor entsprechenden "Betätigungs-Tritten" geschützt ist.

Ausführungsgemäß umfasst das Kinderwagengestell mindestens eine Arretier-, insbesondere Rasteinrichtung, um Räderverbindungseinrichtung und Batteriemodul miteinander zu verbinden, insbesondere miteinander zu verrasten. Die oben genannte Aufgabe wird gemäß Anspruch 11 weiterhin gelöst durch einen Kinderwagen (beispielsweise Kindersportwagen, Buggy oder dergleichen Fahrzeug für Kinder), aufweisend ein Kinderwagengestell der obigen Art. Der Kinderwagen kann neben dem Kinderwagengestell noch eine Aufnahmeeinrichtung für das Kind (beispielsweise Tragetasche und/oder Sitzeinheit) umfassen. Diese Aufnahmeeinrichtung kann gegenüber dem Kinderwagengestell separat bzw. separierbar vorliegen oder (ggf. untrennbar) mit dem Kinderwagengestell verbunden sein.

Weitere Ausführungsformen ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine Schrägansicht eines erfindungsgemäßen Kinderwagengestells;
- Fig. 2: einen Ausschnitt der Ausführungsform gemäß Fig. 1 mit Sicht auf die Hinterachse mit befestigter Batterie;
- Fig. 3: einen Schnitt durch den Ausschnitt gemäß Fig. 2;
- Fig. 4: eine Ansicht analog Fig. 2 mit abgeklappter Batterie;
- Fig. 5: eine weitere Schrägansicht des Ausschnittes gemäß Fig. 2 mit vollständig gelöster Batterie; und
- Fig. 6: einen Schnitt durch den Ausschnitt gemäß Fig. 5.

In der nachfolgenden Beschreibung werden für gleiche und gleichwirkende Teile dieselben Bezugszeichen verwendet.

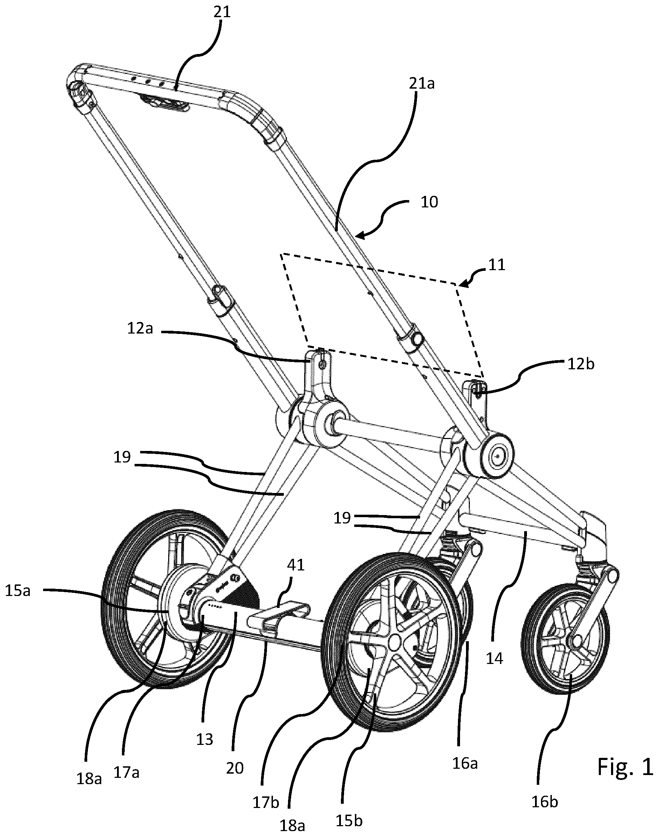

Fig. 1 zeigt einen Kinderwagen (teils schematisch) umfassend ein Kinderwagengestell 10 sowie eine Aufnahmeeinrichtung 11 (nur schematisch als Platzhalter, gestrichelt, gezeichnet), die über Halteeinrichtungen 12a, 12b mit dem Kinderwagengestell 10 verbunden bzw. verbindbar ist. Das Kinderwagengestell 10 umfasst eine (erste) Räderverbindungseinrichtung in Form einer Hinterradstrebe bzw. Hinterradachse 13 und eine (zweite) Räderverbindungseinrichtung in Form einer Vorderradstrebe 14. Aus Gründen der Veranschaulichung wird insbesondere die Hinterradachse 13 und dieser Hinterradachse 13 zugeordnete Teile weiter beschrieben. Dabei gelten die entsprechenden Ausführungen für jegliche Räderverbindungseinrichtung im Allgemeinen (wenn auch im Besonderen für die Hinterradachse 13 als ein zwei Hinterräder verbindendes Element).

Konkret verbindet die Hinterradachse 13 Hinterräder 15a, 15b und die Vorderradstrebe 14, Vorderräder 16a, 16b.

An Enden 17a, 17b der Hinterradachse 13 sind Elektromotoren 18a, 18b angeordnet. Diese treiben jeweils eines der Räder 15a bzw. 15b an. Weiterhin sind an den Enden 17a, 17b weitere (schräg verlaufende) Streben 19 angeordnet, die ebenfalls Bestandteile des Kinderwagengestells 10 sind und nachfolgend nicht weiter erläutert werden. Diese (schräg verlaufenden) Streben sind nicht Bestandteil der Räderverbindungseinrichtung bzw. konkret der Hinterradachse 13.

Weitere Bestandteile des Kinderwagengestells 10 sind insbesondere ein Haltebügel 21a mit einem Haltegriff 21 zum Schieben und/oder Ziehen des Kinderwagens.

Wie in Fig. 1 erkennbar, sind die Elektromotoren 18a, 18b außerhalb der Hinterradachse 13 angeordnet. Insbesondere dieser Gedanke (auch im Falle nur eines Elektromotors oder mehrerer Elektromotoren) ist losgelöst von der konkreten Ausführungsform (beispielsweise als Weiterbildung einer der Ansprüche) zu verstehen. Konkret kann mindestens ein Elektromotor 18a, 18b in einem gegenüber der Räderverbindungseinrichtung eigenständigem Gehäuse untergebracht sein und/oder zumindest abschnittsweise, insbesondere vollständig um die Räderverbindungseinrichtung bzw. ein Gehäuse derselben herum (beispielsweise über einen Winkel von mindestens 180° oder mindestens 270°) angeordnet sein.

Begrifflich soll es sich bei der Räderverbindungseinrichtung (bzw. konkret der Hinterradachse 13) um ein Element handeln, das zum Verbinden und Halten eines Räderpaares ausgebildet ist. Damit sollen weitere Komponenten, wie beispielsweise die Elektromotoren 18a, 18b (und/oder die nachfolgend noch zu erläuternde Betätigungseinrichtung für eine Feststellbremse und/oder das Batteriemodul) nicht zwingend als Teil der Räderverbindungseinrichtung bzw. Hinterradachse angesehen werden, auch wenn diese (ggf. auch unmittelbar) an und/oder auf der Räderverbindungseinrichtung angeordnet sind.

In Fig. 1 ist ein Batteriemodul 20 nur andeutungsweise zu erkennen. Dieses Batteriemodul 20 wird anhand der nachfolgenden Figuren im Detail erläutert.

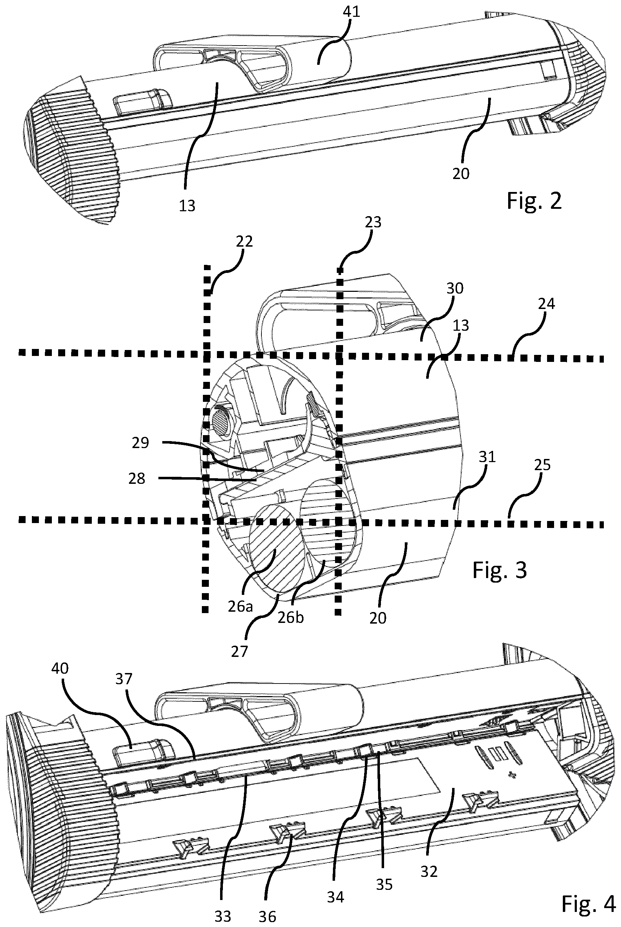

Fig. 2 zeigt einen Ausschnitt der Ausführungsform gemäß Fig. 1 in einer Ansicht auf die Hinterradachse, und zwar von einer Innenseite der ersten vertikalen Ebene (also in diesem Fall aus einer Richtung der Vorderräder) aus betrachtet. Zu erkennen (siehe auch Fig. 1) ist hier auch eine Betätigungseinrichtung 41 für eine (nicht im Detail dargestellte) Feststellbremse zum Blockieren mindestens eines der Hinterräder 18a, 18b (bzw. im Allgemeinen zum Feststellen des Kinderwagens). Die Betätigungseinrichtung 41 ist ausschließlich auf der Hinterradachse 13 bzw. nicht auf dem Batteriemodul 20 angeordnet. Dadurch wird verhindert, dass die Betätigungseinrichtung 41 die Verwendung des Batteriemoduls 20 erschwert.

Das Batteriemodul 20 erstreckt sich zumindest im Wesentlichen über die gesamte (axiale) Länge der Hinterradachse 13 und/oder über einen Großteil (mindestens 50 %, vorzugsweise mindestens 65 %) eines Radabstandes zwischen den Rädern, also im vorliegenden Fall beispielsweise zwischen den Hinterrädern.

Zur Erläuterung der Lage des Batteriemoduls 20 wird nachfolgend auf verschiedene Ebenen Bezug genommen, die anhand der Fig. 3 illustriert werden (mit entsprechenden Linien, die diese Ebenen symbolisieren bzw. veranschaulichen sollen). Eine erste vertikale Ebene ist in Fig. 3 mit einer Linie gekennzeichnet, die wiederum mit dem Bezugszeichen 22 versehen ist. Eine zweite vertikale Ebene ist analog über eine Linie mit dem Bezugszeichen 23 gekennzeichnet. Eine erste horizontale Ebene ist analog über eine Linie mit dem Bezugszeichen 24 gekennzeichnet. Eine zweite horizontale Ebene ist entsprechend mit dem Bezugszeichen 25 gekennzeichnet. Die erste vertikale Ebene 22 tangiert die Hinterradachse 13 von außen bzw. im vorliegenden Fall von hinten. Die zweite vertikale Ebene 23 tangiert die Hinterradachse 13 entsprechend von innen bzw. im vorliegenden Fall von außen. Die erste horizontale Ebene 24 tangiert die Hinterradachse 13 von oben. Die zweite horizontale Ebene 25 tangiert die Hinterradachse 13 von unten. In diesem Zusammenhang ist von einem Betriebszustand des Kinderwagengestells auszugehen.

Wie man aus Fig. 3 erkennt, ist das Batteriemodul 20 zumindest überwiegend (direkt) unter der Hinterradachse 13 angeordnet (Abschnitte des Batteriemoduls 20 sind jedoch auch nicht-unterhalb der Hinterradachse 13 angeordnet, insbesondere wenn man die Hinterradachse 13 als Regenschirm ansieht und den Bereich unterhalb der Hinterradachse 13 als den Bereich, der durch den Regenschirm bei senkrecht fallenden Wassertropfen geschützt wird). Mit anderen Worten ist das Batteriemodul 20 überwiegend (im Sinne von zu mehr als 50 Gew.-% und/oder mindestens 50 Vol.-%) zwischen der ersten vertikalen Ebene 22 und der zweiten vertikalen Ebene 23 angeordnet und zu einem geringeren Teil innerseits der zweiten vertikalen Ebene 23.

Weiterhin ist das Batteriemodul 20 vollständig unterhalb eines Niveaus der ersten horizontalen Ebene 24 und abschnittsweise, insbesondere überwiegend (auch wieder im Sinne von mit mehr als 50 Gew.-% und/oder mindestens 50 Vol.-%) unterhalb eines Niveaus der zweiten horizontalen Ebene 25.

In Fig. 3 sind weiterhin Batterien 26a, 26b innerhalb eines Gehäuses 27 des Batteriemoduls 20 erkennbar. Das Batteriemodul 20 (bzw. dessen Gehäuse 27) weist eine Batteriemodul-Flachseite 28 auf, die (im montierten Zustand) entsprechend an einer Räderverbindungseinrichtung-Flachseite 29 anliegt. Über dieses Anliegen kann auf einfache Art und Weise eine mechanische Kontaktierung bzw. ein Aneinanderfügen des Batteriemoduls 20 und der Räderverbindungseinrichtung (hier Hinterradachse 13) erreicht werden. Weiterhin ist in Fig. 3 erkennbar, dass die Hinterradachse 13 im hier gezeigten Querschnitt zumindest im Wesentlichen halbkreisförmig ausgebildet ist bzw. eine freie Wandung 30 aufweist, die bogenförmig (insbesondere kreisbogenförmig) verläuft. Die freie Wandung 30 umfasst keine Ecken oder Kanten.

Analog umfasst auch eine freie Wandung 31 (im montierten Zustand) des Batteriemoduls 20 vorzugsweise keine Ecken oder Kanten. Konkret kann auch diese freie Wandung 31 im Querschnitt einen Bogen (jedoch ggf. nicht kreisbogenförmig) ausbilden. Bei einer Abweichung von der Bogenform bzw. bei einer Ausbildung von (abgerundeten) Ecken können besonders effektiv mehrere Batterien 26a, 26b eingebracht werden.

Fig. 4 zeigt eine Ansicht analog Fig. 2, jedoch mit zur Veranschaulichung abgeklappt dargestellten Batteriemodul 20, so dass eine (keilförmige) Öffnung 32 zwischen Batteriemodul 20 und Hinterradachse 13 ausgebildet ist. In dieser Position wird das Batteriemodul nicht mehr gehalten (was jedoch alternativ der Fall sein könnte) und würde herunterfallen, wenn nicht z. B. eine Person das Batteriemodul hält. Dadurch kann man die (exemplarische) Befestigung des Batteriemoduls 20 an der Hinterradachse 13 (allgemein:
Räderverbindungseinrichtung) erkennen. An einem inneren (spitzen) Ende 33 der Öffnung 32 greift eine Halteeinrichtung 34, insbesondere umfassend einen Haken, des Batteriemoduls 20 in eine entsprechende Gegenstruktur 35 (allgemein: mindestens eine Gegenstruktur) der Hinterradachse 13 ein. An einem äußeren Rand der sich in Fig. 4 ausbildenden Öffnung 32 sind weitere Eingriffselemente 36 (allgemein: mindestens ein Eingriffselement 36) am Batteriemodul 20 vorgesehen. Über diese Eingriffselemente 36 kann das Batteriemodul 20 in (rastenden) Eingriff mit der Hinterradachse 13 gebracht werden. Dazu kann das Batteriemodul 20 aus der Position gemäß Fig. 4 zu der Hinterradachse 13 hin geklappt werden.

Entsprechende Gegenstrukturen (allg.: mindestens eine Gegenstruktur) an der Hinterradachse 13 für die Eingriffselemente 36 sind in Fig. 4 nicht im Detail erkennbar, können jedoch beim Bezugszeichen 37 lokalisiert sein (beispielsweise). Diese Gegenstrukturen 37 sind vorzugsweise federbelastet und/oder können zur Befestigung des Batteriemoduls 20 (über die Eingriffselemente 36, insbesondere über eine entsprechende Rampe derselben) verdrängt werden. Weiterhin können die Gegenstrukturen 37 von den Eingriffselementen 36 durch eine Betätigungseinrichtung 40 gelöst werden, so dass eine Arretierung aufgehoben wird. Die Betätigungseinrichtung 40 kann konkret als Schieber (alternativ oder zusätzlich als Druckelement, beispielsweise Druckknopf, Zugelement und/oder Hebel) ausgebildet sein.

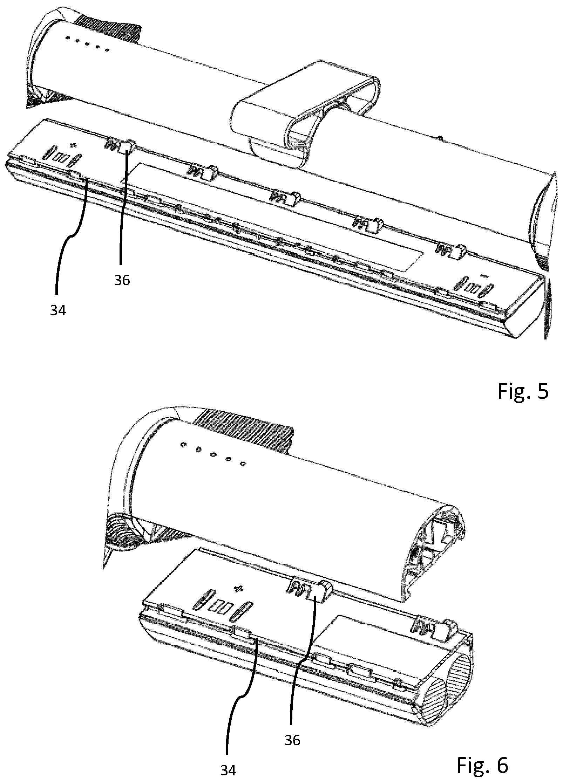

In den Darstellungen gemäß den Fig. 5 und 6 sind nochmals die Eingriffselemente 36 und die Halteeinrichtung (Haken) 34 (jedoch gegenüber Fig. 4 aus einer genau anderen Richtung) erkennbar.

### Bezugszeichen

- 10: Kinderwagengestell
- 11: Aufnahmeeinrichtung
- 12a: Halteeinrichtung
- 12b: Halteeinrichtung
- 13: Hinterradstrebe, insbesondere Hinterradachse
- 14: Vorderradstrebe
- 15a: Hinterrad
- 15b: Hinterrad
- 16a: Vorderrad
- 16b: Vorderrad
- 17a: Ende
- 17b: Ende
- 18a: Elektromotor
- 18b: Elektromotor
- 19: Strebe
- 20: Batteriemodul
- 21: Haltegriff
- 21a: Haltebügel
- 22: erste vertikale Ebene
- 23: zweite vertikale Ebene
- 24: erste horizontale Ebene
- 25: zweite horizontale Ebene
- 26a: Batterie
- 26b: Batterie
- 27: Gehäuse
- 28: Batteriemodul-Flachseite
- 29: Räderverbindungseinrichtung-Flachseite
- 30: freie Wandung
- 31: freie Wandung
- 32: Öffnung
- 33: Ende
- 34: Halteeinrichtung
- 35: Gegenstruktur
- 36: Eingriffselement
- 37: Gegenstruktur
- 40: Betätigungseinrichtung
- 41: Betätigungseinrichtung

## Patentansprüche

1. Kinderwagengestell (10), umfassend
mindestens einen Elektromotor (18a, 18b), zum vorzugsweise unterstützenden Antreiben des Kinderwagengestells (10),
mindestens eine Räderverbindungseinrichtung (13), insbesondere Radachse, vorzugsweise Hinterradachse, und
mindestens ein mit der Räderverbindungseinrichtung (13) verbundenes oder verbindbares Batteriemodul (20), das im Montagezustand zumindest abschnittsweise außerhalb der Räderverbindungseinrichtung (13) angeordnet ist,
wobei das Batteriemodul
- zumindest überwiegend unterhalb eines Niveaus eines oberen Endes der Räderverbindungseinrichtung (13) angeordnet ist und/oder
- zumindest abschnittsweise unter der Räderverbindungseinrichtung (13) angeordnet ist und/oder
- eine Höhe und/oder einen Durchmesser aufweist, die/der maximal 1,5-mal so groß ist/sind, wie eine Höhe bzw. ein Durchmesser der Räderverbindungseinrichtung (13),
**dadurch gekennzeichnet, dass**
sich das Batteriemodul (20) über zumindest die Hälfte eines Radabstandes der durch die Räderverbindungseinrichtung verbundenen Räder und/oder einer Länge der Räderverbindungseinrichtung (13) erstreckt,
wobei das Batteriemodul (20) von der Räderverbindungseinrichtung (13) entfernbar ist.

2. Kinderwagengestell nach Anspruch 1,
**dadurch gekennzeichnet, dass**
das Batteriemodul (20) im Montagezustand zumindest abschnittsweise, insbesondere überwiegend, vorzugsweise vollständig, auf einer auch ein Zentrum des Kinderwagengestell umfassenden Innenseite einer ersten vertikalen Ebene (22), die sich senkrecht zu einer horizontalen Ebene und senkrecht zu einer Fahrtrichtung erstreckt und ein äußeres, vorzugsweise hinteres, Ende der Räderverbindungseinrichtung aufweist, angeordnet ist und/oder so angeordnet ist, dass eine Projektion des Batteriemoduls (20) auf die vertikale Ebene (22) zumindest abschnittweise, vorzugsweise überwiegend und/oder nicht-vollständig, mit einer Projektion der Räderverbindungseinrichtung (13) auf die vertikale Ebene (22) überlappt.

3. Kinderwagengestell nach einem der vorhergehenden Ansprüche,
**dadurch gekennzeichnet, dass**
das Batteriemodul (20) von der Räderverbindungseinrichtung (13) mittels eines Werkzeuges und/oder manuell entfernbar ist.

4. Kinderwagengestell nach einem der vorhergehenden Ansprüche,
**dadurch gekennzeichnet, dass**
das Batteriemodul keinen Elektromotor zum zumindest unterstützenden Antreiben des Kinderwagengestells beinhaltet.

5. Kinderwagengestell nach einem der vorhergehenden Ansprüche,
**dadurch gekennzeichnet, dass**
das Batteriemodul (20) im Montagezustand aus zumindest einem ersten Winkel betrachtet überwiegend, insbesondere vollständig von der Räderverbindungseinrichtung (13) verdeckt wird, wobei zumindest ein erster Winkel vorzugsweise größer 0°, weiter vorzugweise größer 20° und/oder kleiner 90°, vorzugsweise kleiner 60° gegenüber einer horizontalen Ebene ist, und/oder aus zumindest einem zweiten Winkel betrachtet überwiegend nicht, insbesondere vollständig nicht, von der Räderverbindungseinrichtung (13) verdeckt wird.

6. Kinderwagengestell nach einem der vorhergehenden Ansprüche,
**dadurch gekennzeichnet, dass**
ein Randabschnitt eines Querschnittes der Räderverbindungseinrichtung (13), der im Montagezustand nicht an dem Batteriemodul (20) anliegt abgerundet ist, insbesondere zumindest in etwa bogenförmig, vorzugsweise kreisbogenförmig, ausgebildet ist und/oder ein Randabschnitt eines Querschnittes des Batteriemoduls (20), der im Montagezustand nicht an der Räderverbindungseinrichtung (13) anliegt abgerundet ist, insbesondere zumindest in etwa bogenförmig, ggf. mit abgerundeten Eckbereichen oder ohne abgerundete Eckbereiche, ausgebildet ist.

7. Kinderwagengestell nach einem der vorhergehenden Ansprüche,
**dadurch gekennzeichnet, dass**
im Montagezustand äußere Flächen der Räderverbindungseinrichtung (13) und des Batteriemoduls (20) zumindest abschnittsweise zumindest im Wesentlichen ineinander übergehen.

8. Kinderwagengestell nach einem der vorhergehenden Ansprüche,
**dadurch gekennzeichnet, dass**
eine Positionierhilfe, vorzugswiese mindestens ein Anschlag, insbesondere an der Flachseite, vorzugsweise an einem Rand der Flachseite, der Räderverbindungseinrichtung, vorgesehen ist.

9. Kinderwagengestell nach einem der vorhergehenden Ansprüche,
**gekennzeichnet durch**
eine, insbesondere per Fuß zu betätigende, Betätigungseinrichtung (2.1) für eine Bremse, insbesondere Feststellbremse, die vorzugsweise zumindest abschnittsweise, weiter vorzugsweise ausschließlich auf der Räderverbindungseinrichtung (13) und/oder nicht auf dem Batteriemodul (20) angeordnet ist.

10. Kinderwagengestell nach einem der vorhergehenden Ansprüche,
**gekennzeichnet durch**
mindestens eine Arretiereinrichtung, insbesondere Rasteinrichtung, um Räderverbindungseinrichtung (13) und Batteriemodul (20) miteinander zu verbinden, insbesondere miteinander zu verrasten.

11. Kinderwagen, aufweisend ein Kinderwagengestell (10) nach einem der vorhergehenden Ansprüche.

## Claims

1. Stroller frame (10), comprising
at least one electric motor (18a, 18b), for preferably assistively driving the stroller frame (10),
at least one wheel connecting device (13), in particular wheel axle, preferably rear wheel axle, and
at least one battery module (20) which is connected or can be connected to the wheel connecting device (13) and in the assembled state is arranged at least partly outside the wheel connecting device (13), wherein the battery module
- is arranged at least predominantly below a level of an upper end of the wheel connecting device (13) and/or
- is arranged at least partly below the wheel connecting device (13) and/or
- has a height and/or a diameter which is/are at most 1.5 times as large as a height or a diameter of the wheel connecting device (13),
**characterized in that**
the battery module (20) extends over at least half of a wheel distance of the wheels connected by the wheel connecting device and/or a length of the wheel connecting device (13),wherein the battery module (20) can be removed from the wheel connecting device (13).

2. Stroller frame according to claim 1,
**characterized in that**
the battery module (20) in the assembled state at least partly, in particular predominantly, preferably completely, is arranged on an inner side, which also comprises a center of the stroller frame, of a first vertical plane (22) which extends perpendicular to a horizontal plane and perpendicular to a direction of travel and has an outer, preferably rear, end of the wheel connecting device, and/or is arranged such that a projection of the battery module (20) onto the vertical plane (22) overlaps at least in sections, preferably predominantly and/or incompletely, with a projection of the wheel connecting device (13) onto the vertical plane (22).

3. Stroller frame according to one of the preceding claims,
**characterized in that**
the battery module (20) is removable from the wheel connecting device (13) by means of a tool and/or manually.

4. Stroller frame according to one of the preceding claims,
**characterized in that**
the battery module does not include an electric motor for at least assistively driving the stroller frame.

5. Stroller frame according to one of the preceding claims,
**characterized in that**
the battery module (20) in the assembled state when viewed from at least a first angle is predominantly, in particular completely, covered by the wheel connecting device (13), wherein at least a first angle is preferably greater than 0°, further preferably greater than 20° and/or less than 90°, preferably less than 60° with respect to a horizontal plane,
and/or when viewed from at least a second angle is predominantly not, in particular completely not, covered by the wheel connecting device (13).

6. Stroller frame according to one of the preceding claims,
**characterized in that**
an edge section of a cross section of the wheel connecting device (13) which in the assembled state does not bear against the battery module (20) is rounded, in particular formed at least approximately arcuate, preferably circular,
and/or an edge section of a cross section of the battery module (20) which in the assembled state does not bear against the wheel connecting device (13) is rounded, in particular formed at least approximately arcuate, optionally with rounded corner regions or without rounded corner regions.

7. Stroller frame according to one of the preceding claims,
**characterized in that**
in the assembled state, outer surfaces of the wheel connecting device (13) and of the battery module (20) at least partly at least substantially merge.

8. Stroller frame according to one of the preceding claims,
**characterized in that**
a positioning aid, preferably at least one stop, is provided, in particular on the flat side, preferably on an edge of the flat side, of the wheel connecting device.

9. Stroller frame according to one of the preceding claims,
**characterized in that**
an actuating device (2.1), in particular to be actuated by foot, for a brake, in particular a parking brake, which is preferably arranged at least partly, further preferably exclusively on the wheel connecting device (13) and/or not on the battery module (20).

10. Stroller frame according to one of the preceding claims,
**characterized in that**
at least one locking device, in particular latching device, for connecting the wheel connecting device (13) and the battery module (20) to one another, in particular for latching them to one another.

11. Stroller, comprising a stroller frame (10) according to one of the preceding claims.

## Revendications

1. Châssis de poussette (10), comprenant
au moins un électromoteur (18a, 18b), destiné de préférence à un entraînement d'assistance du châssis de poussette (10),
au moins un moyen de liaison de roues (13), en particulier un essieu de roues, de préférence un essieu de roues arrière, et
au moins un module de batterie (20), lié ou pouvant être lié au moyen de liaison de roues (13), qui, à l'état de montage, est agencé au moins en partie à l'extérieur du moyen de liaison de roues (13),
dans lequel le module de batterie
- est agencé au moins principalement en dessous d'un niveau d'une extrémité supérieure du moyen de liaison de roues (13), et/ou
- est agencé au moins en partie sous le moyen de liaison de roues (13), et/ou
- présente une hauteur et/ou un diamètre qui sont au maximum 1,5 fois une hauteur ou un diamètre du moyen de liaison de roues (13),
**caractérisé en ce que**
le module de batterie (20) s'étend sur au moins la moitié d'un écartement de roues des roues liées par le moyen de liaison de roues et/ou d'une longueur du moyen de liaison de roues (13),
dans lequel le module de batterie (20) peut être retiré du moyen de liaison de roues (13).

2. Châssis de poussette selon la revendication 1,
**caractérisé en ce que**
le module de batterie (20), à l'état de montage, est agencé au moins en partie, en particulier principalement, de préférence entièrement, sur un côté intérieur, comprenant également un centre du châssis de poussette, d'un premier plan vertical (22) qui s'étend perpendiculairement à un plan horizontal et perpendiculairement à une direction d'avance et qui présente une extrémité extérieure, de préférence arrière, du moyen de liaison de roues, et est agencé de telle sorte qu'une projection du module de batterie (20) sur le plan vertical (22) se chevauche, au moins en partie, de préférence principalement et/ou pas entièrement, avec une projection du moyen de liaison de roues (13) sur le plan vertical (22).

3. Châssis de poussette selon l'une quelconque des revendications précédentes,
**caractérisé en ce que**
le module de batterie (20) peut être retiré du moyen de liaison de roues (13) à l'aide d'un outil et/ou manuellement.

4. Châssis de poussette selon l'une quelconque des revendications précédentes,
**caractérisé en ce que**
le module de batterie ne comporte pas d'électromoteur destiné au moins à un entraînement d'assistance du châssis de poussette.

5. Châssis de poussette selon l'une quelconque des revendications précédentes,
**caractérisé en ce que**
le module de batterie (20), à l'état de montage, considéré à partir d'au moins un premier angle, est principalement, en particulier entièrement, recouvert par le moyen de liaison de roues (13), dans lequel au moins un premier angle est de préférence supérieur à 0°, de manière préférée supérieur à 20° et/ou inférieur à 90°, de préférence inférieur à 60°, par rapport à un plan horizontal, et/ou, considéré à partir d'au moins un second angle, n'est principalement pas, en particulier entièrement pas, recouvert par le moyen de liaison de roues (13).

6. Châssis de poussette selon l'une quelconque des revendications précédentes,
**caractérisé en ce que**
une partie de bord d'une section transversale du moyen de liaison de roues (13) qui, à l'état de montage, n'est pas en contact avec le module de batterie (20), est arrondie, en particulier est réalisée au moins dans une forme incurvée, de préférence dans une forme d'arc de cercle, et/ou une partie de bord d'une section transversale du module de batterie (20) qui, à l'état de montage, n'est pas en contact avec le moyen de liaison de roues (13), est arrondie, en particulier est réalisée au moins dans une forme incurvée, le cas échéant avec des zones de coin arrondies ou sans zones de coin arrondies.

7. Châssis de poussette selon l'une quelconque des revendications précédentes,
**caractérisé en ce que**
à l'état de montage, des surfaces extérieures du moyen de liaison de roues (16) et du module de batterie (20), au moins en partie, se confondent au moins sensiblement l'une avec l'autre.

8. Châssis de poussette selon l'une quelconque des revendications précédentes,
**caractérisé en ce que**
il est prévu une aide au positionnement, de préférence au moins une butée, en particulier au niveau du côté plat, de préférence au niveau d'un bord du côté plat, du moyen de liaison de roues.

9. Châssis de poussette selon l'une quelconque des revendications précédentes,
**caractérisé par**
un moyen d'actionnement (2.1), en particulier pouvant être actionné au pied, pour un frein, en particulier un frein de stationnement, qui est agencé de préférence au moins en partie, de manière préférée exclusivement, sur le moyen de liaison de roues (13) et/ou pas sur le module de batterie (20).

10. Châssis de poussette selon l'une quelconque des revendications précédentes,
**caractérisé par**
au moins un moyen de blocage, en particulier un moyen d'encliquetage, pour lier l'un à l'autre le moyen de liaison de roues (13) et le module de batterie (20), en particulier pour les encliqueter l'un avec l'autre.

11. Poussette présentant un châssis de poussette (10) selon l'une quelconque des revendications précédentes.
